# EUROPÄISCHE PATENTSCHRIFT

(11) **EP 1 407 610 B1**
(45) Veröffentlichungstag und Bekanntmachung des Hinweises auf die Patenterteilung: **27.09.2006**
(21) Anmeldenummer: 02750801.9
(22) Anmeldetag: 25.06.2002
(51) Int. Cl.: H04N 7/24

(54) **SYSTEM ZUR VERBESSERTEN ENCODIERUNG/DECODIERUNG VON STRUKTURIERTEN, INSBESONDERE XML-BASIERTEN, DOKUMENTEN SOWIE VERFAHREN UND VORRICHTUNGEN ZUR VERBESSERTEN ENCODIERUNG/DECODIERUNG VON BINÄREN REPRÄSENTATIONEN VON SOLCHEN DOKUMENTEN**
SYSTEM FOR THE IMPROVED ENCODING/DECODING OF STRUCTURED, PARTICULARLY XML-BASED, DOCUMENTS AND METHODS AND DEVICES FOR THE IMPROVED ENCODING/DECODING OF BINARY REPRESENTATIONS OF SUCH DOCUMENTS
SYSTEME PERMETTANT UN CODAGE/DECODAGE AMELIORE DE DOCUMENTS STRUCTURES, SE BASANT EN PARTICULIER SUR XML, ET PROCEDES ET DISPOSITIFS PERMETTANT UN CODAGE/DECODAGE AMELIORE DE REPRESENTATIONS BINAIRES DE CES DOCUMENTS

(30) Priorität: 25.06.2001 DE 10130525
(43) Veröffentlichungstag der Anmeldung: 14.04.2004
(73) Patentinhaber: SIEMENS AKTIENGESELLSCHAFT, 80333 München (DE)
(72) Erfinder: HUTTER, Andreas, 81539 München (DE); HEUER, Jörg, 81539 München (DE); NIEDERMEIER, Ulrich, 94405 Landau (DE)
(86) Internationale Anmeldenummer: PCT/DE2002/002309
(87) Internationale Veröffentlichungsnummer: WO 2003/001811

(56) Entgegenhaltungen:
- WO-A-97/34240
- WO-A-02/063775
- "TEXT OF ISO/IEC FCD 15938-1 INFORMATION TECHNOLOGY - MULTIMEDIA CONTENT DESCRIPTION INTERFACE - PART 1 SYSTEMS" ISO/IEC JTC1/SC29/WG11 MPEG01/N4001, XX, XX, März 2001 (2001-03), Seiten 1-2,I-V,6-58, XP001001465

## Beschreibung

System zur verbesserten Encodierung/Decodierung von strukturierten, insbesondere XML-basierten, Dokumenten sowie Verfahren und Vorrichtung zur verbesserten Encodierung/Decodierung von binären Repräsentationen von solchen Dokumenten

Die Erfindung betrifft Verfahren, Vorrichtungen oder Systeme, bei denen eine binäre Repräsentation eines strukturierten, insbesondere XML-basierten Dokuments mit Hilfe eines Schemas codiert und/oder decodiert wird.

Derartige Verfahren, Vorrichtungen oder Systeme sind beispielsweise aus Schriften zum MPEG-7-Standard, insbesondere aus dem "Text of ISO/IEC FCD 15938-1 Information Technology - Multimedia Content Description Interface - Part1, Systems" der Systems Sub-Group, von Claude Seyrat (Expway), Michael Wollborn (Bosch), Ali Tabatabai (Sony, Olivier Avaro (France Telecom R&D) bzw. ISO/IEC JTC1/SC29/WG11, MPEG 01/N4001, March 2001, Singapore", bekannt.

Diese Verfahren zur binären Repräsentation von MPEG-7 und anderen XML-basierten Beschreibungen oder Dokumenten weisen Defizite hinsichtlich der Kompatibilität auf, sofern einem Decoder nur ein Teil des gesamten Namensraums und/oder eines Schemas, der zur Codierung genutzt wurde, bekannt ist.

Aus der WO 02/063775 A ist ein Verfahren zum Encodieren eines strukturierten Dokumentes bekannt, welches eine Struktur aufweist, das durch ein erstes, dem Decoder nicht bekanntes Schema und ein zweites, dem Decoder bekanntes Schema definiert ist, bei dem das Encodieren derart erfolgt, dass das Dokument auf Grundlage des ersten und des zweiten Schemas in einem Binärstrom encodiert wird.

Aus einem Dokument "Text of ISO/IEC FCD 15938- Information Technology - Multimedia Content Description Interface - Part 1 Systems", ISO/IEC JTC1/SC29/WG11 MPEG01/N4001, März 2001" ist eine Übertragung von XML-Dokumenten mittels einer MPEG7-Metadaten-Beschreibung bekannt.

Die der Erfindung zugrundeliegende Aufgabe besteht nun darin, die oben genannten Nachteile zu vermeiden.

Diese Aufgabe wird hinsichtlich eines besseren Verfahrens zur Decodierung durch die Merkmale des Patentanspruchs 1, hinsichtlich besseren Verfahrens zur Encodierung durch die Merkmale des Patentanspruchs 8, hinsichtlich eines Systems zur verbesserten Encodierung/Decodierung durch die Merkmale des Patentanspruchs 15, hinsichtlich einer Vorrichtung zur verbesserten Decodierung durch die Merkmale des Patentanspruchs 17 und hinsichtlich einer Vorrichtung zur verbesserten Encodierung durch die Merkmale des Patentanspruchs 18 gelöst. Die weiteren Ansprüche beziehen sich auf vorteilhafte Ausgestaltungen der Verfahren und des Systems.

Die Erfindung besteht im Wesentlichen darin, dass in der Schemadefinition, die dem Encoder und dem Decoder bekannt ist oder vom Encoder an den Decoder übermittelt wird, Informationen für die Codeberechnung über die nicht im Namensunterraum enthaltenen Elemente bzw. Datentypen mitangegeben werden und auf diese Weise jeder Code in einem, im Folgeneden als Namensunterraum bezeichneten, Teil des gesamten Namensraums eindeutig zugewiesen werden kann. Dadurch muss für die Konfiguration eines Codecs nur ein Teil des gesamten Namensraums inklusive der Anzahl der für die Codeberechnung fehlenden Elemente bzw. Datentypen übertragen werden, was im Allgemeinen ein wesentlich geringeres Datenvolumen bedeutet, als das Datenvolumen, das für den gesamten Namensraum benötigt würde. Zudem sind die Codetabellen kleiner als bei vollständig bekannten Namensräumen, was weniger Speicherplatz im Codec erfordert und eine schnellere En- und Decodierung ermöglicht.

Die Erfindung wird nachfolgend anhand von Zeichnungen zu Ausführungsbeispielen der Erfindung näher erläutert. Dabei zeigt
- Figur 1: eine Prinzipdarstellung eines erfindungsgemäßen Systems mit Encoder und Decoder,
- Figur 2: einen Bitstrom eines Korrekturcodes von Figur 1,
- Figur 3: eine Darstellung zur Erläuterung der Korrektur bei Globalelementen,
- Figur 4: eine Darstellung zur Erläuterung der Korrektur bei Elementen einer Ersetzungsgruppe und
- Figur 5: eine Darstellung zur Erläuterung der Korrektur bei Typidentifikationscodes.

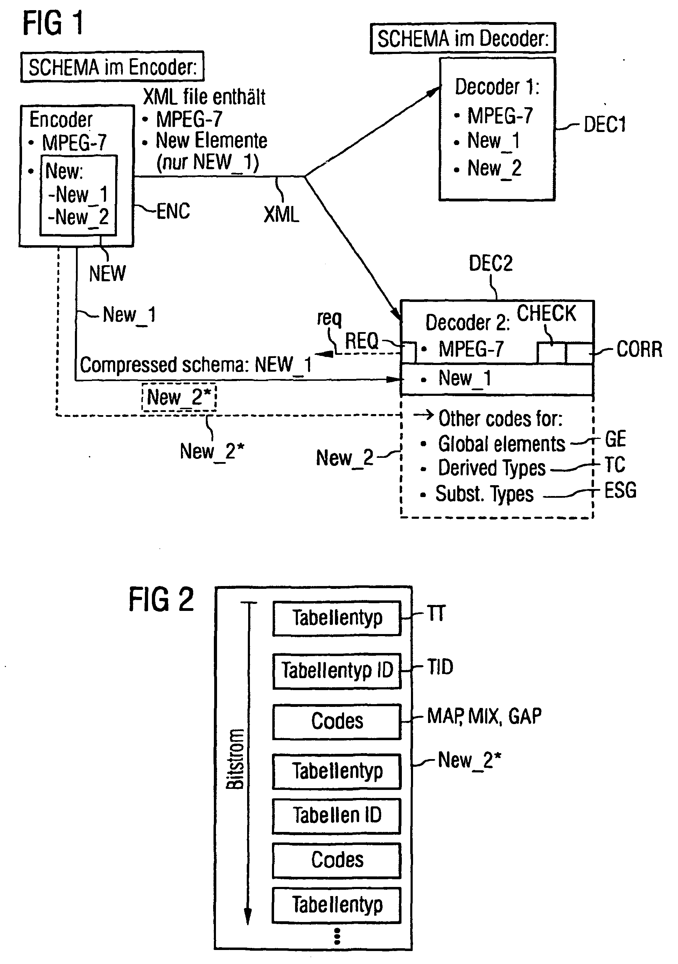

In Figur 1 ist beispielhaft ein System mit einem Encoder ENC und zwei Decodern DEC1 und DEC2 dargestellt, wobei dem Decoder ein Schema MPEG-7 sowie ein Schema New mit den Namensunterräumen NEW_1 und New_2 zur Verfügung steht. Der Encoder sendet hier ein XML-File XML, das MPEG-7-Elemente und Elemente des Schemas New enthält, wobei letztere Elemente aber nur aus dem Namensunterraum NEW_1 stammen. Der Decoder DEC1, dem beide Namensräume MPEG-7 und New bzw. die Namensunterräume New_1 und New_2 bekannt sind, kann dieses Dokument natürlich in entsprechender Weise decodieren. Dem Decoder DEC2 ist hingegen nur der Namensraum MPEG-7 bekannt. Daher wird diesem, zum Beispiel auf ein Anforderungssignal req hin oder zum Beispiel durch regelmäßige Übermittlung, der Namensunterraum New_1 als Schema übermittelt. Allerdings kann der Decoder DEC2 nun das Dokument immer noch nicht decodieren, da ihm die Codezuweisung von globalen Elementen GE, Typcodes TC.und Substitution Codes ESG aus dem Unterraum New_2 fehlen und er somit die Codezuweisungen nicht berechnen kann. Um dieses Problem zu beseitigen, wird nicht der gesamte Namensunterraum New_2 dem Decoder DEC2 zur Verfügung gestellt, sondern vorteilhafter Weise nur ein Korrekturcode New_2* an Stelle der im Namensunterraum und/oder vereinfachten Schema New_1 nicht enthaltenen Elemente und/oder Typen des vollständigen Namensraums übertragen. Aus dem übermittelten vereinfachten Schema kann nun der Decoder DEC2 mit Hilfe des Korrekturcodes das XML-basierte Dokument XML gemäß dem vollständigen Namensraum und/oder Schema decodieren.

In Figur 2 ist ein Bitstrom für den Korrekturcode New_2* gezeigt, der mindestens ein Triple aus einem Tabellentyp TT der zu korrigierenden Elemente GE, ESG oder Typen TC, einer Tabellenidentifizierung TID zur Festlegung der zu korrigierenden Tabelle und einer Korrekturinformation MAP, GAP oder MIX aufweist. Aus der durch den Tabellentyp und die Tabellenidentifizierung festgelegten Codetabelle des vereinfachten Schemas New_1 wird nun mit Hilfe der Korrekturinformation New_2* eine Codetabelle des vollständigen Schemas New erzeugt, die nur Einträge für die Elemente und Typen aus dem Namensunterraum und/oder vereinfachten Schema New_1 enthält.

Der Tabellentyp TT spezifiziert, ob ein globales Element GE, Typcode TC oder Elemente einer Substitutionsgruppe ESG ergänzt wird. Die Tabellenidentifikation TID identifiziert die zu manipulierende Tabelle, wobei dies beim Typcode mit dem Typcode des Basistypen bezogen auf den Urtyp und bei einer Substitutionsgruppe mit dem Schemaverzweigungscode SBC des globalen Kopfelementes erfolgt. Bei globalen Elementen wird das Feld TID hingegen nicht codiert.

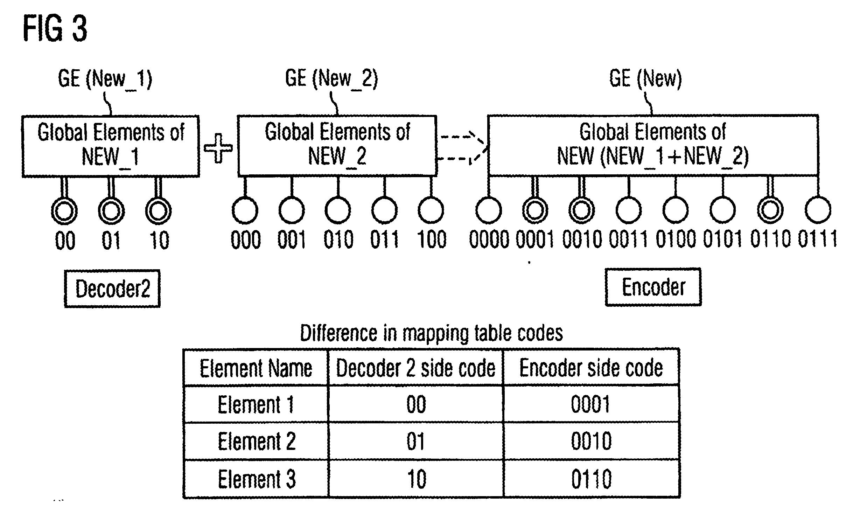

In Figur 3 wird beispielhaft die Codierung der globalen Elemente GE(New_1) im Decoder DEC2 und die Codierung der globalen Elemente GE(New) im Encoder ENC, also im vollständigen Namensraum, miteinander verglichen und die Unterschiede in den Tabellencodes festgestellt. Hieraus wird deutlich, dass die Codes der Elemente 1 bis 3 im Decoder DEC2 mit 00, 01 und 10 im Encoder ENC hingegen mit 0001, 0010 und 0110, dass also beispielsweise Lücken 0000 zu Beginn, Lücken 0011...0101 in der Mitte und Lücken 0111 am Ende der Codetabelle auftreten können.

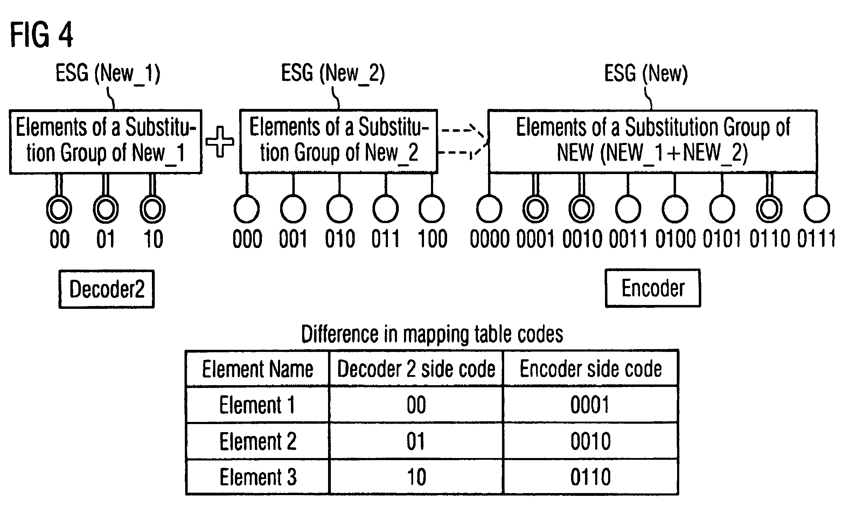

In Figur 4 ist entsprechenderweise die Codierung von Elementen ESG(New_1) von Substitutionsgruppen im Decoder DEC2, also eine Decodierung im Namensunterraum New_1, und eine Codierung der Elemente ESG(New) dieser Substitutionsgruppe im vollständigen Namensraum New sowie die zugehörigen Tabellencodes dargestellt. Auch hier wird deutlich, das die Codes 00, 01 und 10 der Elemente 1 bis 3 des Decoders DEC2 Codes im Encoder entsprechen, die an beliebiger Stelle der entsprechenden Codetabelle liegen können.

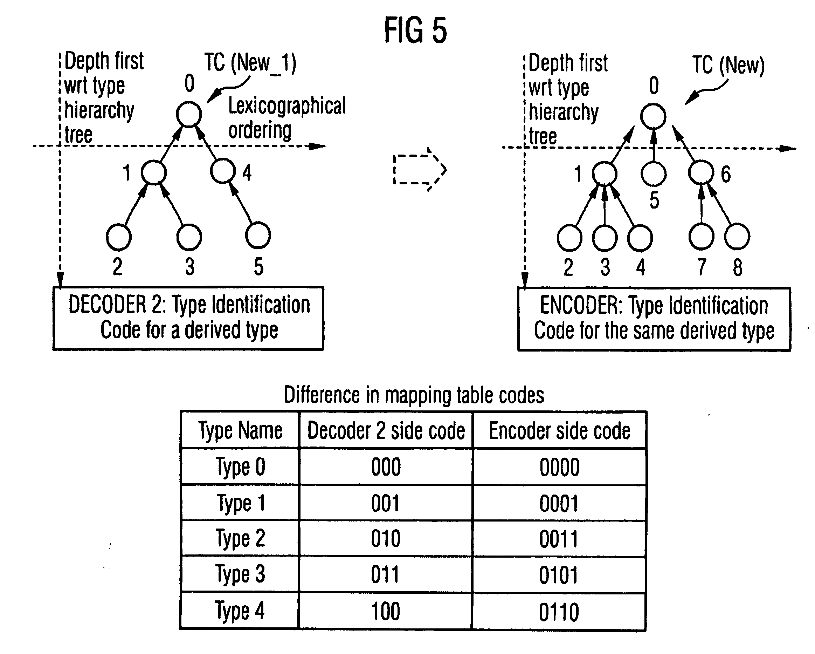

In Figur 5 wird dieser Vergleich zwischen den Typidentifikationscodes TC(New_1) im Decoder DEC2 und den Typidentifikationscodes TC(New) für denselben Basistyp im Encoder ENC, also im vollständigen Namensraum dargestellt. Die abgeleiteten Typen im Namensunterraum, denen Typidentifikationscodes TC(New_1) zugeordnet sind, können hier beispielsweise in einer baumartige Struktur angeordnet werden, wobei mit einem Wurzelknoten 0 der Basistyp symblisiert wird, der Kindknoten 1 und 4 aufweist, die vom Basistyp direkt abgeleitete Typen repräsentieren, wobei der Kindknoten 1 wiederum Kindknoten 2 und 3 und der Kindknoten 4 einen Kindknoten 5 aufweist, die von abgeleiteten Typen wiederum abgeleitete Typen repräsentieren. Die fünf Typen 0 bis 5 im Decoder DEC2 werden im Encoder in einer baumartigen Struktur mit neun Knoten 0 bis 8 repräsentiert. Die baumartige Struktur mit dem vollständigen Namensraum weist einen Wurzelknoten 0 und drei Kindknoten 1, 5 und 6 auf, wobei der Kindknoten 1 wiederum drei Kindknoten 2, 3 und 4 und der Kindknoten 6 zwei Kindknoten 7 und 8 beisitzt. Dementsprechend sind die Datentypen Nummer 2, 5 und 8 dem Decoder DEC2 aus dem Namensunterraum nicht bekannt.
Als eindeutiges Codezuordnungsprinzip kann beispielsweise die sogenannte "Depth first"-Methode nach lexikographischer Ordnung nach dem zitierten MPEG-7 Standard verwendet werden, das also zuerst die möglichen Knoten in der Tiefe bzw. in Richtung Blätter einer baumartigen Struktur adressiert, um die baumartige Struktur der abgeleiteten Typen in eine Sequenz an Typen abzubilden und den Typen in dieser Reihenfolge der Sequenz Typcodes zuzuweisen. Dementsprechend können die Codes auch Tabellarisch entsprechend der globalen Elemente und entsprechend einer Substitutionsgruppe dargestellt werden.

Das letzte Feld MAP, MIX, GAP eines Triples im Bitstrom von Figur 2 enthält schließlich Informationen über Elemente bzw. Typen in einer jeweiligen Tabelle bzw. einem jeweiligen Baum, die nicht übertragen worden sind.

Diese Informationen können entsprechend dreier Ausgestaltungen des erfindungsgemäßen Verfahrens codiert werden, die im Folgenden näher beschrieben werden:

Im Falle der Methode MAP wird zu jedem Code, der aufgrund der ausschließlichen Kenntnis des Namensunterraums New_1 vom Decoder DEC2 nicht entsprechend dem Encoder ENC berechnet wird, ein Korrekturcode übertragen, der zwei Teile enthält, nämlich eine Länge der Codewörter des vollständigen Namensraums und/oder Schemas und eine Liste mit Codeersetzungen. Der Decoder DEC2 ersetzt dabei die in der adressierten Codetabelle bzw. im Codebaum enthaltenen Codes mit den übertragenen Codes. Dieses Verfahren eignet sich besonderes dann, wenn der Namensraum New_1 nur wenige Elementdeklarationen bzw. Typdefinitionen enthält.

Im Falle der Methode GAP wird ein Korrekturcode übertragen, der nur aus einer Liste mit Lückenzahlen für die Codetabelle des vollständigen Namensraums und/oder Schemas enthält. Der Decoder DEC2 liest n+1 Zahlen ein, wobei n die Anzahl der Einträge in der adressierten Codetabelle bzw. dem Codebaum des Namensunterraums New_1 ist. Entsprechend der eingelesenen Zahl werden an der jeweiligen Stelle in der Codetabelle bzw. dem Codebaum Einträge generiert. Anschließend werden die Codes aller Einträge neu berechnet. Dieses Verfahren eignet sich besonders dann, wenn der Namensunterraum New_1 nur wenige Elementdeklarationen bzw. Datentypdefinitionen enthält.

Im dritten Fall MIX enthält die Korrekturinformation drei Teile, nämlich eine Länge der Codewörter des vollständigen Namensraums und/oder Schemas, eine Anzahl der Lücken in der Codetabelle in Bezug auf den vollständigen Namensraum und/oder Schema und eine Liste mit Codeersetzungen, wobei jeweils eine Codeersetzung für ein Element oder einen Typ direkt nach einer Lücke in der Codetabelle durchgeführt wird und anschließend die Codezuweisung aller restlichen Einträge in der Codetabelle durchgeführt wird. Der Decoder DEC2 liest den neuen Code des Eintrags ein und modifiziert die Codes der folgenden Einträge entsprechend des eingangs genannten bekannten Verfahrens. Dieses Verfahren eignet sich besonders für viele fehlende Elementdeklarationen bzw. Typdefinitionen, die zusammenhängen.

Alle drei im Vorangehenden beschriebene Ausgestaltungen können für die Korrekturinformation wahlweise genutzt werden, indem vor der eigentlichen Korrekturinformation beispielsweise mit zwei Bit die im folgenden genutzte Ausgestaltung der Korrekturinformation signalisiert wird.

## Patentansprüche

1. Verfahren zur verbesserten Decodierung einer binären Repräsentation eines XML-basierten Dokuments, wobei
a) die binäre Repräsentation des XML-basierten Dokuments auf mindestens einem Namensraum oder Schema (New) basiert,
b) das XML-basierte Dokument aus dem Namensraum oder Schema (New) lediglich Elemente und/oder Typen des Namensunterraums (New_1) des Namensraums (New) oder des vereinfachten Schemas (New_1) des Schemas (New) aufweist,
**dadurch gekennzeichnet, dass**
c) mindestens einem Decoder (DEC2) der Namensunterraum oder das vereinfachte Schema (New_1) übermittelt wird,
d) ein Korrekturcode (New_2*) dem mindestens einen Decoder (DEC2) übermittelt wird, wobei mit Hilfe des Korrekturcodes (New_2*) eine Codeersetzung von Codes des Namensunterraums oder des vereinfachten Schemas (New_1) in Codes des Namensraums oder Schemas (New) durchgeführt wird,
e) durch den Decoder (DEC2) aus dem Namensunterraum oder vereinfachten Schema (New_1) mit Hilfe des Korrekturcodes (New_2*) die binäre Repräsentation des XML-basierten Dokuments gemäß dem Namensraum oder Schema (New) decodiert wird.

2. Verfahren nach Anspruch 1,
bei dem durch den mindestens einen Decoder (DEC2), falls der Namensraum oder das Schema (New) in dem mindestens einen Decoder (DEC2) nicht vorhanden ist, ein Anfragesignal (req) zur Übermittlung des Namensunterraums oder des vereinfachten Schemas (New_1) und des Korrekturcodes (New_2*) gebildet wird.

3. Verfahren nach Anspruch 1 oder 2,
bei dem der Korrekturcode (New_2*) aus einem Bitstrom mit mindestens einem Tripel aus
a) einem Tabellentyp (TT) der zu korrigierenden Elemente (GE, ESG) oder Typen (TC),
b) einer Tabellenidentifizierung (TID) zur Festlegung einer zu korrigierenden Tabelle, wobei bei globalen Elementen (GE) keine Codierung erfolgt, und
c) einer Korrekturinformation (MAP, GAP, MIX) erzeugbar ist.

4. Verfahren nach dem Anspruch 3,
bei dem aus einer durch den Tabellentyp (TT) und die Tabellenidentifizierung (TID) festgelegten Codetabelle des Namensunterraums oder vereinfachten Schemas (New_1) mit Hilfe der Korrekturinformation (MAP, GAP, MIX) eine Codetabelle des Namensraums oder Schemas (New) für die Elemente und Typen aus dem Namensunterraum oder vereinfachten Schema (New_1) erzeugt wird.

5. Verfahren nach einem der Ansprüche 3 bis 4,
bei dem die Korrekturinformation (MAP) eine Länge der Codewörter des Namensraums und/oder Schemas (New) und eine Liste mit Codeersetzungen enthält.

6. Verfahren nach einem der Ansprüche 3 bis 4,
bei dem die Korrekturinformation (GAP) eine Liste mit Lückenanzahlen für die Codetabelle des Namensraums oder Schemas (New) enthält.

7. Verfahren nach einem der Ansprüche 3 bis 4,
bei dem die Korrekturinformation (MIX) eine Länge der Codewörter des Namensraums oder Schemas (New), eine Anzahl der Lücken in der Codetabelle in Bezug auf den Namensraum und/oder Schema (New) und eine Liste mit Codeersetzungen enthält, wobei jeweils eine Codeersetzung für ein Element oder einen Typ direkt nach einer Lücke in der Codetabelle durchgeführt wird und abschließend die Codezuweisung aller restlichen Einträge in Codetabelle durchgeführt wird.

8. Verfahren zur verbesserten Encodierung eines XML-basierten Dokuments, bei dem
a) ein aus einem XML-basierten Dokument mit mindestens einem Namensraum oder Schema (New) eine binäre Repräsentation des XML-basierten Dokuments gebildet und übermittelt wird, wobei das XML-basierte Dokument aus dem Namensraum oder Schema (New) lediglich Elemente und/oder Typen des Namensunterraums (New_1) des Namensraums (New) oder des vereinfachten Schemas (New_1) des Schemas (New) aufweist,
b) der Namensunterraum oder das vereinfachte Schema (New_1) und ein Korrekturcode (New_2*) gebildet und übermittelt wird, wobei mit Hilfe des Korrekturcodes (New_2*) eine Codeersetzung von Codes des Namensunterraums oder des vereinfachten Schemas (New_1) in Codes des Namensraums oder Schemas (New) durchgeführt wird.

9. Verfahren nach Anspruch 8,
bei dem ein Encoder (ENC) erst auf ein Anfragesignal (req) hin, den Namensunterraum oder das vereinfachte Schema (New_1) mit den Elementen und/oder Typen des Dokuments und einen Korrekturcode (New_2*) bildet und übermittelt.

10. Verfahren nach Anspruch 8 oder 9,
bei dem der Korrekturcode aus einem Bitstrom mit mindestens einem Tripel aus
a) einem Tabellentyp (TT) der zu korrigierenden Elemente (GE, ESG) oder Typen (TC),
b) einer Tabellenidentifizierung (TID) zur Festlegung einer zu korrigierenden Tabelle, wobei bei globalen Elementen (GE) keine Codierung erfolgt,
c) einer Korrekturinformation (MAP, GAP, MIX) erzeugbar ist.

11. Verfahren nach dem Anspruch 10,
bei dem aus einer durch den Tabellentyp (TT) und die Tabellenidentifizierung (TID) festgelegten Codetabelle des Namensunterraums oder vereinfachten Schemas (New_1) mit Hilfe der Korrekturinformation (MAP, GAP, MIX) eine Codetabelle des Namensraums oder Schemas (New) für die Elemente und Typen aus dem Namensunterraum oder vereinfachten Schema (New_1) erzeugt wird.

12. Verfahren nach einem der Ansprüche 10 bis 11,
bei dem die Korrekturinformation (MAP) eine Länge der Codewörter des Namensraums oder Schemas (New) und eine Liste mit Codeersetzungen enthält.

13. Verfahren nach einem der Ansprüche 10 bis 11,
bei dem die Korrekturinformation (GAP) eine Liste mit Lückenanzahlen für die Codetabelle des Namensraums oder Schemas (New) enthält.

14. Verfahren nach einem der Ansprüche 10 bis 11,
bei dem die Korrekturinformation (MIX) eine Länge der Codewörter des Namensraums oder Schemas (New), eine Anzahl der Lücken in der Codetabelle in Bezug auf den Namensraum oder Schema (New) und eine Liste mit Codeersetzungen enthält, wobei jeweils eine Codeersetzung für ein Element oder einen Typ direkt nach einer Lücke in der Codetabelle durchgeführt wird und abschließend die Codezuweisung aller restlichen Einträge in Codetabelle durchgeführt wird.

15. System zur verbesserten Encodierung/Decodierung eines XML-basierten Dokuments, bei dem
a) ein Encoder (ENC) aus einem XML-basierten Dokument mit mindestens einem Namensraum oder Schema (New) eine binäre Repräsentation des XML-basierten Dokuments bildet an mindestens einen Decoder (DEC2) übermittelt, wobei das XML-basierte Dokument aus dem Namensraum oder Schema (New) lediglich Elemente und/oder Typen des Namensunterraums (New_1) des Namensraums (New) oder des vereinfachten Schemas (New_1) des Schemas (New) aufweist,
b) der Encoder (ENC) den Namensunterraum oder das vereinfachte Schema (New_1) und einen Korrekturcode (New_2*) bildet und dem mindestens einen Decoder (DEC2) übermittelt, wobei mit Hilfe des Korrekturcodes (New_2*) eine Codeersetzung von Codes des Namensunterraums oder des vereinfachten Schemas (New_1) in Codes des Namensraums oder Schemas (New) durchgeführt wird,
c) der Decoder (DEC2) aus dem Namensunterraum oder dem vereinfachten Schema (New_1) mit Hilfe des Korrekturcodes (New_2*) die binäre Repräsentation des XML-basierten Dokuments gemäß dem Namensraum oder dem Schema (New) decodiert.

16. Ein System nach Anspruch 15, bei dem
a) der mindestens eine Decoder (DEC2) das Vorhandensein des erforderlichen Namensraums oder Schemas (New) im jeweiligen Decoder (DEC2) überprüft und, falls dieser Namensraum oder dieses Schema (New) in dem mindestens einen Decoder (DEC2) nicht vorhanden ist, ein Anfragesignal (req) an den Encoder (ENC) bildet,
b) der Encoder (ENC) erst auf das Anfragesignal (req) hin, den Namensunterraum oder das vereinfachte Schema (New_1) und den Korrekturcode (New_2*) bildet und dem mindestens einen Decoder (DEC2) übermittelt.

17. Vorrichtung zur verbesserten Decodierung einer binären Repräsentationen eines XML-basierten Dokuments, wobei
a) die binäre Repräsentation des XML-basierten Dokuments auf mindestens einem Namensraum oder Schema (New) basiert,
b) das XML-basierte Dokument aus dem Namensraum oder Schema (New) lediglich Elemente und/oder Typen des Namensunterraums (New_1) des Namensraums (New) oder des vereinfachten Schemas (New_1) des Schemas (New) aufweist,
bei der
c) eine Einheit derart vorhanden ist, dass der Namensunterraum oder das vereinfachte Schema (New_1) und ein Korrekturcode (New_2*) empfangen werden, wobei mit Hilfe des Korrekturcodes (New_2*) eine Codeersetzung von Codes des Namensunterraums oder des vereinfachten Schemas (New_1) in Codes des Namensraums oder Schemas (New) durchgeführt wird,
d) eine weitere Einheit derart vorhanden ist, dass aus dem Namensunterraum oder dem vereinfachten Schema (New_1) mit Hilfe des Korrekturcodes (New_2*) die binäre Repräsentation des XML-basierten Dokuments gemäß dem Namensraum oder dem Schema (New) decodiert wird.

18. Vorrichtung zur verbesserten Encodierung einer binären Repräsentation eines XML-basierten Dokuments, bei dem
a) eine Einheit derart vorhanden ist, dass aus dem XML-basierten Dokument mit mindestens einem Namensraum oder Schema (New) die binäre Repräsentation des XML-basierten Dokuments gebildet und gesendet wird, wobei das XML-basierte Dokument aus dem Namensraum oder Schema (New) lediglich Elemente und/oder Typen des Namensunterraums (New_1) des Namensraums (New) oder des vereinfachten Schemas (New_1) des Schemas (New) aufweist,
b) eine weitere Einheit derart vorhanden ist, dass der Namensunterraum oder das vereinfachte Schema (New_1) und ein Korrekturcode (New_2*) gesendet werden, wobei mit Hilfe des Korrekturcodes (New_2*) eine Codeersetzung von Codes des Namensunterraums oder des vereinfachten Schemas (New_1) in Codes des Namensraums oder Schemas (New) durchgeführt wird.

## Claims

1. Method for improved decoding of a binary representation of an XML-based document, wherein
a) the binary representation of the XML-based document is based on at least one name space or schema (New),
b) the XML-based document from the name space or schema (New) has only elements and/or types of the name subspace (New_1) of the name space (New) or of the simplified schema (New_1) of the schema (New),
**characterised in that**
c) the name subspace or the simplified schema (New_1) is transmitted to at least one decoder (DEC2),
d) a correction code (New_2*) is transmitted to the at least one decoder (DEC2), a code substitution of codes of the name subspace or of the simplified schema (New_1) into codes of the name space or schema (New) being performed with the aid of said correction code (New_2*),
e) the binary representation of the XML-based document in accordance with the name space or schema (New) is decoded by the decoder (DEC2) from the name subspace or simplified schema (New_1) with the aid of the correction code.

2. Method according to claim 1,
wherein a request signal (req) for transmitting the name subspace or the simplified schema (New_1) and the correction code (New_2*) is formed by the at least one decoder (DEC2) if the name space or the schema (New) is not present in the at least one decoder (DEC2).

3. Method according to claim 1 or 2,
wherein the correction code (New_2*) can be generated from a bit stream containing at least one triple from
a) a table type (TT) of the elements (GE, ESG) or types (TC) that are to be corrected,
b) a table identification (TID) for specifying a table that is to be corrected, with no coding taking place in the case of global elements (GE), and
c) correction information (MAP, GAP, MIX).

4. Method according to claim 3,
wherein a code table of the name space or schema (New) is generated for the elements and types from the name subspace or simplified schema (New_1) from a code table of the name subspace or simplified schema (New_1) specified by the table type (TT) and table identification (TID) with the aid of the correction information (MAP, GAP, MIX).

5. Method according to one of the claims 3 to 4,
wherein the correction information (MAP) contains a length of the code words of the name space and/or schema (New) and a list containing code substitutions.

6. Method according to one of the claims 3 to 4,
wherein the correction information (GAP) contains a list containing a count of the number of gaps for the code table of the name space or schema (New).

7. Method according to one of the claims 3 to 4,
wherein the correction information (MIX) contains a length of the code words of the name space or schema (New), a count of the number of gaps in the code table in relation to the name space and/or schema (New) and a list containing code substitutions, with a code substitution for an element or a type being performed in each case directly after a gap in the code table and subsequently the code assignment of all the remaining entries in the code table being performed.

8. Method for improved encoding of an XML-based document, wherein
a) a binary representation of an XML-based document is formed from the XML-based document with at least one name space or schema (New) and transmitted, with the XML-based document from the name space or schema (New) having only elements and/or types of the name subspace (New_1) of the name space (New) or the simplified schema (New_1) of the schema (New),
b) the name subspace or the simplified schema (New_1) and a correction code (New_2*) are formed and transmitted, with a code substitution of codes of the name subspace or the simplified schema (New_1) into codes of the name space or schema (New) being performed with the aid of the correction code (New_2*).

9. Method according to claim 8,
wherein an encoder (ENC) forms and transmits the name subspace or the simplified schema (New_1) containing the elements and/or types of the document and a correction code (New_2*) only in response to a request signal (req).

10. Method according to claim 8 or 9,
wherein the correction code can be generated from a bit stream containing at least one triple from
a) a table type (TT) of the elements (GE, ESG) or types (TC) that are to be corrected,
b) a table identification (TID) for specifying a table that is to be corrected, with no coding taking place in the case of global elements (GE), and
c) correction information (MAP, GAP, MIX).

11. Method according to claim 10,
wherein a code table of the name space or schema (New) is generated for the elements and types from the name subspace or simplified schema (New_1) from a code table of the name subspace or simplified schema (New_1) specified by the table type (TT) and the table identification (TID) with the aid of the correction information (MAP, GAP, MIX).

12. Method according to one of the claims 10 to 11,
wherein the correction information (MAP) contains a length of the code words of the name space or schema (New) and a list containing code substitutions.

13. Method according to one of the claims 10 to 11,
wherein the correction information (GAP) contains a list containing a count of the number of gaps for the code table of the name space or schema (New).

14. Method according to one of the claims 10 to 11,
wherein the correction information (MIX) contains a length of the code words of the name space or schema (New), a count of the number of gaps in the code table in relation to the name space or schema (New) and a list containing code substitutions, with a code substitution for an element or a type being performed in each case directly after a gap in the code table and subsequently the code assignment of all the remaining entries in the code table being performed.

15. System for improved encoding/decoding of an XML-based document,
a) wherein an encoder (ENC) forms a binary representation of an XML-based document from the XML-based document with at least one name space or schema (new) and transmits it to at least one decoder (DEC2), with the XML-based document from the name space or schema (New) having only elements and/or types of the name subspace (New_1) of the name space (New) or of the simplified schema (New_1) of the schema (New),
b) the encoder (ENC) forms the name subspace or the simplified schema (New_1) and a correction code (New_2*) and transmits same to the at least one decoder (DEC2), with a code substitution of codes of the name subspace or the simplified schema ((New_1) into codes of the name space or schema (New) being performed with the aid of the correction code (New_2*),
c) the decoder (DEC2) decodes the binary representation of the XML-based document in accordance with the name space or the schema (New) from the name subspace or the simplified schema (New_1) with the aid of the correction code (New_2*).

16. A system according to claim 15, wherein
a) the at least one decoder (DEC2) checks for the presence of the required name space or schema (New) in the respective decoder (DEC2) and, if said name space or schema (New) is not present in the at least one decoder (DEC2), forms a request signal (req) and transmits this to the encoder (ENC),
b) the encoder (ENC) forms the name subspace or the simplified schema (New_1) and the correction code (New_2*) only in response to the request signal and transmits same to the at least one decoder (DEC2).

17. Device for improved decoding of a binary representation of an XML-based document, wherein
a) the binary representation of the XML-based document is based on at least one name space or schema (New),
b) the XML-based document from the name space or schema (New) has only elements and/or types of the name subspace (New_1) of the name space (New) or of the simplified schema (New_1) of the schema (New),
wherein
c) a unit is present such that the name subspace or the simplified schema (New_1) and a correction code (New_2*) are received, with a code substitution of codes of the name subspace or the simplified schema (New_1) into codes of the name space or schema (New) being performed with the aid of the correction code (New_2*),
d) a further unit is present such that the binary representation of the XML-based document is decoded in accordance with the name space or the schema from the name subspace or the simplified schema (New_1) with the aid of the correction code (New_2*).

18. Device for improved encoding of a binary representation of an XML-based document, wherein
a) a unit is present such that the binary representation of the XML-based document is formed from the XML-based document containing at least one name space or schema (New) and transmitted, with the XML-based document from the name space or schema (New) having only elements and/or types of the name subspace (New_1) of the name space (New) or the simplified schema (New_1) of the schema (New),
b) a further unit is present such that the name subspace or the simplified schema (New_1) and a correction code (New_2*) are transmitted, with a code substitution of codes of the name subspace or the simplified schema ((New_1) into codes of the name space or schema (New) being performed with the aid of the correction code (New_2*).

## Revendications

1. Procédé pour le décodage amélioré d'une représentation binaire d'un document basé sur XML,
a) la représentation binaire du document basé sur XML étant basée sur au moins un espace de nom ou un schéma (New),
b) le document basé sur XML provenant de l'espace de nom ou du schéma (New) présentant uniquement des éléments et/ou du type du sous-espace de nom (New_1) de l'espace de nom (New) ou du schéma simplifié (New_1) du schéma (New),
**caractérisé en ce que**
c) le sous-espace de nom ou le schéma simplifié (New_1) est transmis à au moins un décodeur (DEC2),
d) un code de correction (New_2*) est transmis à l'au moins un décodeur (DEC2), un remplacement de codes du sous-espace de nom ou du schéma simplifié (New_1) en codes de l'espace de nom ou du schéma (New) étant effectué à l'aide du code de correction (New_2*).
e) la représentation binaire du document basé sur XML selon l'espace de nom ou le schéma (New) étant décodée par le décodeur (DEC2) à partir du sous-espace de nom ou du schéma simplifié (New_1) à l'aide du code de correction (New_2*).

2. Procédé selon la revendication 1,
dans lequel un signal de demande (req) pour la transmission du sous-espace de nom ou du schéma simplifié (New_1) et du code de correction (New_2*) est formé par le au moins un décodeur (DEC2), dans le cas où l'espace de nom ou le schéma (New) n'est pas présent dans le au moins un décodeur (DEC2).

3. Procédé selon la revendication 1 ou 2,
dans lequel le code de correction (New_2*) peut être généré à partir d'un flux binaire comprenant au moins un triplet qui est constitué
a) d'un type de tableau (TT) des éléments (GE, ESG) ou des types (TC) à corriger,
b) d'une identification de tableau (TID) pour la définition d'un tableau à corriger, aucun codage n'étant effectué dans le cas d'éléments globaux (GE), et
c) d'une information de correction (MAP, GAP, MIX).

4. Procédé selon la revendication 3,
dans lequel, à partir d'un tableau de codes, défini par le type de tableau (TT) et l'identification de tableau (TID), du sous-espace de nom ou du schéma simplifié (New_1), on génère à l'aide de l'information de correction (MAP, GAP, MIX) un tableau de codes de l'espace de nom ou du schéma (New) pour les éléments et types à partir du sous-espace de nom ou du schéma simplifié (New_1).

5. Procédé selon l'une quelconque des revendications 3 à 4, dans lequel l'information de correction (MAP) contient une longueur des mots de code de l'espace de nom et/ou du schéma (New) et une liste avec des remplacements de code.

6. Procédé selon l'une quelconque des revendications 3 à 4, dans lequel l'information de correction (GAP) contient une liste avec des nombres d'espaces vides pour le tableau de codes de l'espace de nom ou du schéma (New).

7. Procédé selon l'une quelconque des revendications 3 à 4, dans lequel l'information de correction (MIX) contient une longueur des mots de code de l'espace de nom ou du schéma (New), un nombre des espaces vides dans le tableau de codes par rapport à l'espace de nom et/ou au schéma (New) et une liste avec des remplacements de code, à chaque fois un remplacement de code étant effectué pour un élément ou un type directement après un espace vide dans le code de tableau et l'attribution de code de toutes les inscriptions restantes étant effectuée ensuite dans le tableau de codes.

8. Procédé pour le codage amélioré d'un document basé sur XML, dans lequel
a) une représentation binaire du document basé sur XML est formée et transmise à partir d'un document basé sur XML avec au moins un espace de nom ou un schéma (New), le document basé sur XML présentant à partir de l'espace de nom ou du schéma (New) seulement des éléments et/ou des types du sous-espace de nom (New_1) de l'espace de nom (New) ou du schéma simplifié (New_1) du schéma (New),
b) le sous-espace de nom ou le schéma simplifié (New_1) ou un code de correction (New_2*) est formé et transmis, un remplacement de codes du sous-espace de nom ou du schéma simplifié (New_1) en codes de l'espace de nom ou du schéma (New) étant effectué à l'aide du code de correction (New_2*).

9. Procédé selon la revendication 8,
dans lequel un encodeur (ENC) forme et transmet seulement à la suite d'un signal de demande (req) le sous-espace de nom ou le schéma simplifié (New_1) avec les éléments et/ou des types du document et un code de correction (New_2*).

10. Procédé selon la revendication 8 ou 9,
dans lequel le code de correction peut être généré à partir d'un flux binaire comprenant au moins un triplet constitué
a) d'un type de tableau (TT) des éléments (GE, ESG) ou des types à corriger (TC),
b) d'une identification de tableau (TID) pour la fixation d'un tableau à corriger, aucun codage n'étant effectué dans le cas d'éléments globaux (GE)
c) d'une information de correction (MAP, GAP, MIX).

11. Procédé selon la revendication 10,
dans lequel, à partir d'un tableau de codes, défini par le type de tableau (TT) et l'identification de tableau (TID), du sous-espace de nom ou du schéma simplifié (New_1), on génère à l'aide de l'information de correction (MAP, GAP, MIX) un tableau de codes de l'espace de nom ou du schéma (New) pour les éléments et types à partir du sous-espace de nom ou du schéma simplifié (New_1).

12. Procédé selon l'une quelconque des revendications 10 à 11, dans lequel l'information de correction (MAP) contient une longueur des mots de code de l'espace de nom ou du schéma (New) et une liste avec des remplacements de code.

13. Procédé selon l'une quelconque des revendications 10 à 11, dans lequel l'information de correction (GAP) contient une liste avec des nombres d'espaces vides pour le tableau de codes de l'espace de nom ou du schéma (New).

14. Procédé selon l'une quelconque des revendications 10 à 11, dans lequel l'information de correction (MIX) contient une longueur des mots de code de l'espace de nom ou du schéma (New), un nombre des espaces vides dans le tableau de codes par rapport à l'espace de nom ou au schéma (New) et une liste avec des remplacements de code, chaque fois un remplacement de code étant effectué pour un élément ou un type directement après un espace vide dans le tableau de codes et pour finir l'attribution de code de toutes les inscriptions restantes étant effectuée dans le tableau de codes.

15. Système pour le codage/décodage amélioré d'un document basé sur XML dans lequel
a) un codeur (ENC) forme à partir d'un document basé sur XML avec au moins un espace de nom ou un schéma (New) une représentation binaire du document basé sur XML et le transmet à au moins un décodeur (DEC2), le document basé sur XML présentant à partir de l'espace de nom ou du schéma (New) uniquement des éléments et/ou des types de sous-espace de nom (New_1) de l'espace de nom (New) ou du schéma simplifié (New_1) du schéma (New).
b) l'encodeur forme le sous-espace de nom ou le schéma simplifié (New) et un code de correction (New_2*), et le transmet à l'au moins un décodeur (DEC2), un remplacement de codes du sous-espace de nom ou du schéma simplifié (New_1) en codes de l'espace de nom ou du schéma (New) étant effectué à l'aide du code de correction (New_2*)
c) le décodeur (DEC2) décodant à partir de l'aide du sous-espace de nom ou du schéma simplifié (New_1) à l'aide du code de correction (New_2*) la représentation binaire du document basé sur XML selon l'espace de nom ou le schéma (New).

16. Un système selon la revendication 15, dans lequel
a) le au moins un décodeur (DEC2) vérifie la présence de l'espace de nom nécessaire ou du schéma nécessaire (New) dans le décodeur concerné (DEC2) et, si cet espace de nom ou ce schéma (New) n'est pas présent dans le au moins un décodeur (DEC2), il forme un signal de demande (req) à destination du codeur (ENC),
b) le codeur (ENC) forme à la suite du signal de demande (req) le sous-espace de nom ou le schéma simplifié (New_1) et le code de correction (New_2*) et le transmet à le au moins un décodeur (DEC2).

17. Dispositif pour le codage amélioré d'une représentation binaire d'un document basé sur XML,
a) la représentation binaire du document basé sur XML étant basée sur au moins un espace de nom ou un schéma (New),
b) le document basé sur XML présentant à partir de l'espace de nom ou du schéma (New) uniquement des éléments et/ou des types du sous-espace de nom (New_1) de l'espace de nom (New) ou du schéma simplifié (New_1) du schéma (New),
dans lequel
c) une unité est présente de telle sorte que le sous-espace de nom ou le schéma simplifié (New_1) et un code de correction (New_2*) sont reçus, un remplacement de codes du sous-espace de nom ou du schéma simplifié (New_1) en codes du sous-espace ou du schéma (New) étant effectué à l'aide du code de correction (New_2*),
d) une autre unité est présente de telle sorte que, à partir du sous-espace de nom ou du schéma simplifié (New_1), on décode à l'aide du code de correction (New_2*) la représentation binaire du document basé sur XML selon l'espace de nom ou le schéma (New).

18. Dispositif pour le codage amélioré d'une représentation binaire d'un document basé sur XML, sur lequel
a) une unité est présente de telle sorte que, à partir du document basé sur XML, la représentation binaire du document basé sur XML est formée avec au moins un espace de nom ou un schéma (New) et envoyée, le document basé sur XML présentant à partir de l'espace de nom ou du schéma (New) uniquement des éléments et/ou des types du sous-espace de nom (New_1) de l'espace de nom (New) ou du schéma simplifié (New_1) du schéma (New),
b) une autre unité est présente de telle sorte que le sous-espace de nom ou le schéma simplifié (New_1) et un code de correction (New_2*) sont envoyés, un remplacement de codes du sous-espace de nom ou du schéma simplifié (New_1) en codes du sous-espace de nom ou du schéma (1) étant effectué à l'aide du code de correction (New_2*).
